# EUROPÄISCHE PATENTSCHRIFT

(11) **EP 3 474 664 B1**
(45) Veröffentlichungstag und Bekanntmachung des Hinweises auf die Patenterteilung: **03.06.2020**
(21) Anmeldenummer: 17734276.3
(22) Anmeldetag: 21.06.2017
(51) Int. Cl.: A01M 7/00

(54) **SYSTEM UND VERFAHREN ZUM FÖRDERN EINER LANDWIRTSCHAFTLICHEN FORMULIERUNG**
SYSTEM AND METHOD FOR CONVEYING AN AGRICULTURAL FORMULATION
SYSTEME ET PROCEDE DE TRANSPORT D'UNE FORMULE AGRICOLE

(30) Priorität: 24.06.2016 EP 16176157
(43) Veröffentlichungstag der Anmeldung: 01.05.2019
(73) Patentinhaber: BASF SE, 67056 Ludwigshafen am Rhein (DE)
(72) Erfinder: BRIX, Horst Dieter, 67117 Limburgerhof (DE); KROEGER, Harald, 67117 Limburgerhof (DE); WEGKAMP, Heinz-Gerd, 67117 Limburgerhof (DE); WICHMANN, Wolf-Dieter, 17391 Neetzow (DE)
(74) Vertreter: BASF IP Association
(86) Internationale Anmeldenummer: PCT/EP2017/065312
(87) Internationale Veröffentlichungsnummer: WO 2017/220694

(56) Entgegenhaltungen:
- WO-A1-2013/083608
- WO-A1-2013/087103
- Hk Hydraulik Gmbh: "Infos zu Hydraulikflüssigkeiten, Hydrauliköl, Hydraulikfluid", , 21. Mai 2011 (2011-05-21), Seiten 1-3, XP055328947, Gefunden im Internet: URL:https://www.hk-hydraulik.com/de/hydrau liklexikon/hydraulik-fluide [gefunden am 2016-12-14]

## Beschreibung

Die vorliegende Erfindung betrifft ein System zum Fördern einer landwirtschaftlichen Formulierung. Das System umfasst einen Behälter zur Aufnahme der landwirtschaftlichen Formulierung, wobei der Behälter eine Entnahmeöffnung aufweist. Das System umfasst ferner eine fest in oder an dem Behälter befestigte Fördereinheit zum Fördern der in dem Behälter befindlichen landwirtschaftlichen Formulierung durch die Entnahmeöffnung. Des Weiteren umfasst das System eine Antriebseinheit, die zum Antrieb der Fördereinheit separat von der Fördereinheit lösbar mit der Fördereinheit gekoppelt ist. Die Antriebseinheit weist eine Hydraulikeinheit und eine Hydraulikleitung auf. Die Hydraulikeinheit umfasst einen Zylinderraum, einen in dem Zylinderraum hin und her bewegbaren Kolben und eine Austrittsöffnung für eine Hydraulikflüssigkeit. Die Hydraulikleitung ist mit der Austrittsöffnung der Hydraulikeinheit gekoppelt und mit der Fördereinheit koppelbar. Des Weiteren betrifft die Erfindung ein Verfahren zum Fördern einer landwirtschaftlichen Formulierung und die Verwendung des Systems zum Fördern einer landwirtschaftlichen Formulierung.

Es ist bekannt, landwirtschaftliche Formulierungen aus größeren Behältern mittels einer Pumpe zu entnehmen. Die Entnahmeöffnung wird hierfür über einen Schlauch mit einer Fördereinheit, wie beispielsweise einer Pumpe, verbunden, welche die im Innenraum des Behälters befindliche Formulierung von außen absaugt.

Nachteilig an einem solchen System ist es, dass die mit der landwirtschaftlichen Formulierung in Berührung kommenden Teile der Fördereinheit möglicherweise bereits in Verbindung mit Behältern verwendet wurden, die eine andere landwirtschaftliche Formulierung enthielten. In diesem Fall besteht die Gefahr, dass es bei der Entnahme der Formulierung durch die Fördereinheit zu einer Kontamination der landwirtschaftlichen Formulierung mit einer anderen landwirtschaftlichen Formulierung oder anderen Rückständen in der Fördereinheit kommt. Derartige Kontaminationen sollten jedoch unbedingt vermieden werden.

Aus der WO 2013/083608 A1 ist zur Lösung dieses Problems eine Entnahmevorrichtung bekannt, bei der die Fördereinheit so im Innenraum des Behälters angeordnet ist, dass mittels der Fördereinheit ein im Behälter befindliches Pflanzenschutzmittel durch die Entnahmeöffnung des Behälters aus dem Behälter heraus förderbar ist. Des Weiteren ist die Antriebseinheit außerhalb des Innenraums des Behälters angeordnet. Diese Antriebseinheit treibt von außen die im Innenraum des Behälters befindliche Fördereinheit an. Durch die Integration der Fördereinheit in den Behälter kann eine Kontamination des Pflanzenschutzmittels bei der Entnahme mittels der Fördereinheit verhindert werden, da die Fördereinheit nicht in Verbindung mit anderen Pflanzenschutzmittelbehältern eingesetzt wird. Die Antriebseinheit ist hingegen lösbar mit der Fördereinheit gekoppelt, so dass sie auch mit anderen Behältern eingesetzt werden kann.

Die im Innenraum des Behälters angeordnete Fördereinheit kann dabei durch eine mechanische Bewegung oder auf hydraulische Weise angetrieben werden.

Aus der WO 2013/087103 A1 ist ein System zum Ausbringen von flüssigen Gemischen bekannt, das einem Behälter mit einer Dosierpumpe zum Fördern der in dem Behälter befindlichen Flüssigkeit sowie eine Antriebseinheit umfasst, die lösbar mit der Dosierpumpe zum Antrieb der Dosierpumpe gekoppelt ist. Dabei kann die Antriebseinheit die Dosierpumpe hydraulisch antreiben.

Da bei einem hydraulischen Antrieb die Antriebseinheit von der Fördereinheit an- und abgekoppelt werden kann, ergibt sich jedoch das Problem, dass Leckagen von Hydraulikflüssigkeit auftreten können. Bei einem Einsatz des Systems in der Landwirtschaft sind derartige Leckagen nachteilig, wenn umweltschädigendes Hydrauliköl austritt und in die Umwelt gelangt.

Hydraulikflüssigkeiten mit verschiedenen Eigenschaften sind allgemein aus der Veröffentlichung "HK Hydraulik GmbH: Infos zu Hydraulikflüssigkeiten, Hydrauliköl, Hydraulikfluid", vom 21 Mai 2011 bekannt.

Es ist daher die Aufgabe der vorliegenden Erfindung, ein System und ein Verfahren bereitzustellen, welche eine umweltschädigende Kontamination beim Betrieb des Systems beziehungsweise des Verfahrens zum Fördern der landwirtschaftlichen Formulierung vermeiden.

Erfindungsgemäß wird diese Aufgabe durch ein System mit dem Merkmal des Anspruchs 1 und ein Verfahren mit dem Merkmal des Anspruchs 10 gelöst. Vorteilhafte Ausgestaltungen und Weiterbildungen ergeben sich aus den abhängigen Ansprüchen.

Dementsprechend ist bei dem erfindungsgemäßen System die Hydraulikflüssigkeit Wasser oder sie ist biologisch schnell abbaubar. Ferner weist bei dem erfindungsgemäßen System die Hydraulikeinheit einen weiteren Zylinderraum auf, der mit zumindest einer weiteren Hydraulikleitung verbunden ist, über welche eine weitere Hydraulikflüssigkeit zur Hin- und Herbewegung des Kolbens in den weiteren Zylinderraum einleitbar ist. Der Kolben ist hierfür zweiteilig ausgebildet, wobei der erste Kolbenteil eine erste hydraulische Kolbenfläche aufweist, welche den Zylinderraum begrenzt, und wobei der zweite Kolbenteil zumindest eine weitere hydraulische Kolbenfläche aufweist, auf die ein Druck mittels der weiteren Hydraulikflüssigkeit ausübbar ist, so dass mittels der weiteren Hydraulikflüssigkeit der zweite Kolbenteil in dem weiteren Zylinderraum bewegbar ist.

Unter einer biologisch schnell abbaubaren Hydraulikflüssigkeit wird im Sinne der Erfindung insbesondere eine umweltfreundliche Hydraulikflüssigkeit verstanden. Es sind beispielsweise lebensmittelverträgliche Hydraulikflüssigkeiten bekannt, welche auf sehr reinem petrochemischen Weißöl basieren. Des Weiteren sind biologisch schnell abbaubare Hydraulikflüssigkeiten für den Einsatz in biologisch kritischen Umgebungen, wie Wasserschutzgebieten, im Wald oder im Gebirge bekannt. Solche Hydraulikflüssigkeiten basieren beispielsweise auf pflanzlichen Ölen. Ferner können sie auf Basis von Polyglycolen oder synthetischen Estern hergestellt werden.

Bei dem erfindungsgemäßen System übt somit ein sich bewegender Kolben einen Druck auf eine Hydraulikflüssigkeit im Zylinderraum der Hydraulikeinheit aus, welcher über die Hydraulikleitung an die Fördereinheit übertragen wird. Die Fördereinheit, welche in oder an dem Behälter zur Aufnahme der landwirtschaftlichen Formulierung befestigt ist, kann auf diese Weise angetrieben werden. Wenn beim Lösen der Antriebseinheit von der Fördereinheit Hydraulikflüssigkeit in die Umgebung gelangt, hat dies vorteilhafterweise keine umweltschädigenden Auswirkungen, da die Hydraulikflüssigkeit Wasser ist oder biologisch schnell abbaubar ist. Die umweltschädigenden Einflüsse von austretenden Hydraulikölen können auf diese Weise verhindert werden.

Üblicherweise wird Wasser nicht als Hydraulikflüssigkeit eingesetzt. Der Grund hierfür ist die sehr geringe, ohne elastische Dichtelemente schwer zu dichtende Viskosität von Wasser. Zudem neigt Wasser zur Aufnahme von Luft und zur Kavitation. Beides kann Wasser kompressibel machen, was bei der Verwendung als Hydraulikflüssigkeit nachteilig ist. Der Kontakt mit Wasser fördert ferner auch Korrosion. Schließlich gefriert Wasser bei Temperaturen von 0° Grad und darunter.

Überraschenderweise hat sich herausgestellt, dass bei dem System zum Fördern der landwirtschaftlichen Formulierung bei einem hydraulischen Antrieb der Fördereinheit Wasser als Hydraulikflüssigkeit eingesetzt werden kann, ohne dass die beschriebenen Nachteile den Antrieb der Fördereinheit zum Fördern der landwirtschaftlichen Formulierung negativ beeinflussen.

In der Hydraulikleitung kann beispielsweise eine Kupplung, insbesondere ein sogenanntes Schnellkupplungssystem angeordnet sein. Über diese Kupplung beziehungsweise dieses Schnellkupplungssystem ist die Antriebseinheit mit der Fördereinheit verbindbar oder von der Fördereinheit lösbar. Eine solche Kupplung in der Hydraulikleitung ermöglicht es dem Nutzer, den Behälter mit der darin oder daran befestigten Fördereinheit schnell und einfach mit der separaten Antriebseinheit zu koppeln.

Gemäß einer Ausgestaltung des erfindungsgemäßen Systems weist die weitere hydraulische Kolbenfläche des zweiten Kolbenteils eine zweite und eine dritte hydraulischen Kolbenfläche auf, die entgegengesetzt ausgerichtet sind und auf die wechselweise ein Druck mittels der weiteren Hydraulikflüssigkeit ausübbar ist, so dass mittels der weiteren Hydraulikflüssigkeit der zweite Kolbenteil in dem weiteren Zylinderraum hin und her bewegbar ist.

Die zweite und die dritte hydraulische Kolbenfläche sind zumindest so entgegengesetzt ausgerichtet, dass sie Normalen besitzen, welche zumindest Komponenten aufweisen, die entgegengesetzt ausgerichtet sind. Bei dem erfindungsgemäßen System wird somit der zweite Kolbenteil mittels der weiteren Hydraulikflüssigkeit im weiteren Zylinderraum hin und her bewegt. Da der erste Kolbenteil fest mit dem zweiten Kolbenteil verbunden ist, wird der erste Kolbenteil in dem Zylinderraum hin und her bewegt. Dort übt die erste hydraulische Kolbenfläche einen Druck auf die Hydraulikflüssigkeit bei einer Bewegung aus, welche das Volumen des Zylinderraums verkleinert. Auf diese Weise wird Hydraulikflüssigkeit durch die Hydraulikleitung in Richtung der Fördereinheit des Behälters gedrückt, wodurch die Fördereinheit angetrieben wird.

Gemäß einer Ausgestaltung des erfindungsgemäßen Systems unterscheidet sich die weitere Hydraulikflüssigkeit von der vorstehend zuerst genannten Hydraulikflüssigkeit, welche die Fördereinheit antreibt. Bei der weiteren Hydraulikflüssigkeit handelt es sich insbesondere um ein Hydrauliköl. Mittels der Hydraulikeinheit wird somit bei dem erfindungsgemäßen System ein Übergang von einem herkömmlichen ölhydraulischen Antrieb mit einer Hydraulikflüssigkeit, welche nicht in die Umwelt gelangen sollte, zu einem wasserhydraulischen Antrieb oder einem hydraulischen Antrieb mit einer biologisch schnell abbaubaren Hydraulikflüssigkeit geschaffen.

Das System kann des Weiteren ein Hydraulikventil umfassen, über welches der Hydraulikeinheit über die zumindest eine weitere Hydraulikleitung die weitere Hydraulikflüssigkeit zuführbar ist. Das Hydraulikventil und/oder die Hydraulikeinheit sind insbesondere fest mit einem Trägerfahrzeug, wie beispielsweise einem Ackerschlepper, verbunden. Auf diese Weise lässt sich die üblicherweise bereits bei einem Trägerfahrzeug angeordnete Ölhydraulik zum Antrieb der in oder an dem Behälter für die landwirtschaftliche Formulierung gekoppelten Fördereinheit nutzen, ohne dass durch das An- und Abkoppeln der hydraulischen Antriebseinheit von beziehungsweise an die Fördereinheit das Risiko besteht, dass umweltschädliche Hydraulikflüssigkeit in die Umgebung gelangt.

Bei der Fördereinheit handelt es sich insbesondere um eine hydraulisch angetriebene Kolbendosierpumpe. Diese Kolbendosierpumpe wird direkt von der Hydraulikflüssigkeit angetrieben. Unter einem solchen direktem hydraulischen Antrieb der Kolbendosierpumpe ist zu verstehen, dass ein Kolben der Kolbendosierpumpe in einem Zylinder auf einer Seite eine wirksame Fläche für die Förderung des zu dosierenden Mediums, das heißt im vorliegend Fall der landwirtschaftlichen Formulierung, besitzt, und auf der anderen Seite eine oder mehrere wirksame Flächen für den hydraulischen Antrieb mit Wasser oder einer biologisch schnell abbaubaren Hydraulikflüssigkeit. Vorteilhaft an diesem direkten hydraulischen Antrieb ist, dass keine weiteren mechanischen Bauteile außer dem Kolben in dem Zylinder erforderlich sind. Mittels der Kolbendosierpumpe kann die landwirtschaftliche Formulierung nicht nur gefördert sondern auch dosiert werden.

Bei dem erfindungsgemäßen System ist es vorteilhafterweise möglich, eine mit dem ölhydraulischen Antrieb des Trägerfahrzeugs betriebene Hydraulikeinheit in einen wasserhydraulischen Antrieb der Kolbendosierpumpe des Behälters für die landwirtschaftliche Formulierung umzusetzen. Dabei werden hydraulische Druckimpulse für den Antrieb der Kolbendosierpumpe mit Wasser als Hydraulikflüssigkeit erzeugt.

Mittels der Kolbendosierpumpe kann die landwirtschaftliche Formulierung beispielsweise in den Wasserstrom einer Pflanzenschutzeinrichtung dosiert werden. Vorteilhaft an dem Einsatz einer Kolbendosierpumpe in oder an dem Behälter für die landwirtschaftliche Formulierung ist, dass die Parameter der Kolbendosierpumpe exakt auf die Eigenschaften der zu dosierenden landwirtschaftlichen Formulierung abgestimmt sein können. Damit reduzieren sich die technischen Anforderungen an die Kolbendosierpumpe.

Der Antrieb des Kolbens der Hydraulikeinheit kann alternativ mechanisch, elektrisch oder pneumatisch erfolgen. Der elektrische Antrieb kann beispielsweise über einen Elektromotor und/oder elektrische Ventile erfolgen. Der mechanische Antrieb kann beispielsweise über die Zapfwelle eines Trägerfahrzeugs erfolgen. Ein pneumatischer Antrieb kann über eine bereits vorhandene Druckluftanlage des Trägerfahrzeugs realisiert werden.

Gemäß einer Weiterbildung des erfindungsgemäßen Systems steht die Hydraulikleitung in Fluidverbindung mit einem Füllventil, über welches Hydraulikflüssigkeit in die Hydraulikleitung einleitbar ist. Bei dem Füllventil handelt es sich insbesondere um ein Rückschlagventil ohne Federrückstellung.

Das Füllventil ist insbesondere so angeordnet, dass es öffnet, wenn der Kolben keinen Druck auf die Hydraulikflüssigkeit zum Antrieb der Fördereinheit ausübt, das heißt, wenn sich der Kolben in dem Zylinderraum zurückbewegt. Wenn hingegen mittels der Hydraulikeinheit ein Druck zum Antrieb der Fördereinheit auf die Hydraulikflüssigkeit in der Hydraulikleitung ausgeübt wird, wird das Füllventil insbesondere automatisch geschlossen. Durch diese Anordnung wird verhindert, dass sich ein Unterdruck in der Hydraulikleitung bildet und hierdurch Luft in die Hydraulikleitung gelangt. Bei geöffnetem Füllventil kann nämlich Hydraulikflüssigkeit in die Hydraulikleitung gelangen. Wenn beispielsweise Hydraulikflüssigkeit beim An- oder Abkuppeln der Antriebseinheit an die Fördereinheit in die Umgebung geleckt ist, kann eine solche Leckage automatisch mittels des Füllventils ausgeglichen werden.

Gemäß noch einer Weiterbildung des erfindungsgemäßen Systems ist das Füllventil an der höchsten Stelle der Hydraulikleitung angeordnet. Die Hydraulikleitung ist dabei insbesondere so ausgebildet, dass in der Hydraulikleitung enthaltene Luft nach oben steigen und durch das geöffnete Füllventil entweichen kann. Auf diese Weise wird vermieden, dass die Hydraulikflüssigkeit, das heißt insbesondere das Wasser, gegebenenfalls in der Hydraulikleitung enthaltene Luft aufnimmt und damit die Eigenschaften des Wassers als Hydraulikflüssigkeit negativ beeinflusst.

Bei dem erfindungsgemäßen System kann an die Entnahmeöffnung des Behälters insbesondere eine Ausstoßeinrichtung angeschlossen werden. Bei dieser Ausstoßeinrichtung kann es sich beispielsweise um eine Spritzpistole handeln, über welche die landwirtschaftliche Formulierung herausgespritzt werden kann. Die Ausstoßeinrichtung umfasst eine Eingangsöffnung und eine Ausstoßöffnung. Bei der Ausstoßöffnung kann beispielsweise eine geeignete Düse vorgesehen sein.

Bei dem erfindungsgemäßen Verfahren zum Fördern einer landwirtschaftlichen Formulierung wird in einem Zylinderraum einer Hydraulikeinheit ein Kolben bewegt und dadurch wird ein Druck auf eine Hydraulikflüssigkeit ausgeübt. Dabei ist die Hydraulikflüssigkeit biologisch schnell abbaubar oder sie ist Wasser. Die Hydraulikflüssigkeit überträgt den ausgeübten Druck über eine mit dem Zylinderraum verbundene Hydraulikleitung an eine separat von der Hydraulikeinheit angeordnete Fördereinheit. Dabei ist die Hydraulikleitung mit der Fördereinheit verbindbar und von der Fördereinheit lösbar, wobei die Fördereinheit fest in oder an einem Behälter befestigt ist, welcher die landwirtschaftliche Formulierung aufnimmt. Der Kolben wird bei dem erfindungsgemäßen Verfahren durch eine weitere Hydraulikflüssigkeit angetrieben. Die Fördereinheit wiederum wird von dem durch die Hydraulikflüssigkeit übertragenen Druck angetrieben, so dass sie die landwirtschaftliche Formulierung durch eine Entnahmeöffnung des Behälters herausfördert.

Das erfindungsgemäße Verfahren kann insbesondere durch das vorstehend beschriebene erfindungsgemäße System durchgeführt werden. Es weist somit auch dieselben Vorteile auf.

Bei dem erfindungsgemäßen Verfahren kann es sich bei der weiteren Hydraulikflüssigkeit beispielsweise um ein Hydrauliköl handeln.

Die landwirtschaftliche Formulierung enthält insbesondere ein Pflanzenschutzmittel.

Die vorliegende Erfindung betrifft ferner die Verwendung des vorstehend beschriebenen Systems zum Fördern einer landwirtschaftlichen Formulierung, die ein Pflanzenschutzmittel enthält. Das erfindungsgemäße System kann beispielsweise in Verbindung mit flüssigen Pflanzenschutzmitteln eingesetzt werden, die als EC, EW, SC, ME, SE, SL oder OD formuliert sind. Diese Formulierungstypen sind dem Fachmann geläufig, und beispielsweise beschrieben in H. Mollet, A. Grubenmann "Formulation Technology", WILEY-VCH, Weinheim 2001, S. 389-397 und dort zitierte Literatur.

Unter einer EC versteht der Fachmann eine flüssige Pflanzenschutzmittel-Formulierung, in dem der bzw. die Pflanzenschutzwirkstoffe als homogene Lösung in einem mit Wasser nicht mischbaren organischen Lösungsmittel bzw. Lösungsmittelgemisch vorliegen, wobei die Lösung beim Verdünnen mit Wasser eine Emulsion ergibt.

Unter einer EW versteht der Fachmann eine flüssige Pflanzenschutzmittel-Formulierung, in dem der bzw. die Pflanzenschutzwirkstoffe in Form einer Öl-in-Wasser-Emulsion vorliegen, wobei wenigstens einer der Pflanzenschutzwirkstoffe in den Öltröpfchen vorliegt.

Unter einem SC versteht der Fachmann eine flüssige Pflanzenschutzmittel-Formulierung, in dem der bzw. die Pflanzenschutzwirkstoffe in Form von festen, feinteiligen Partikeln vorliegen, die in einer wässrigen kohärenten Phase suspendiert sind. Diese Formulierungen werden auch als Suspensionskonzentrate bezeichnet.

Unter einer ME versteht der Fachmann eine flüssige Pflanzenschutzmittel-Formulierung, in dem der bzw. die Pflanzenschutzwirkstoffe in Form einer Mikroemulsion vorliegen, wobei typischerweise wenigstens einer der Pflanzenschutzwirkstoffe typischerweise gelöst in der organischen Phase vorliegt.

Unter einem OD versteht der Fachmann eine flüssige Pflanzenschutzmittel-Formulierung, in dem der bzw. die Pflanzenschutzwirkstoffe in Form von festen, feinteiligen Partikeln vorliegen, die in einer nicht-wässrigen kohärenten Phase suspendiert sind. Diese Formulierungen werden auch als Öldispersionskonzentrate bezeichnet.

Unter einer SL Formulierung versteht der Fachmann ein wasserlösliches, flüssiges Konzentrat eines hinreichend wasserlöslichen Wirkstoffs (d.h. der Wirkstoff ist bei der gewünschten Aufwandmenge/Anwendungskonzentration in Wasser homogen verteilbar). Die Löslichkeit kann durch die Formulierungsbestandteile, beispielsweise wasserlösliche organische Lösungsmittel wie Alkanole (Ethanol, Propanol, Isoproanol), Dimethylformamid (DMF), Dimethylsulfoxid (DMSO), Butyrolacton, Diethylenglykol, aber auch durch wasserlösliche Tenside (Fettalkoholethoxylate, Polyalkylenether, Zuckertenside, Anionische Tenside) erhöht werden.

Manche Wirkstoffe, beispielsweise Glyphosate, Gluphosinate, Fosamine, Imidazolinone sowie bestimmte Salze aromatischer Carbonsäuren (Dicamba, chloramben, Tricamba, Bispyribac, pyriminobac, pyrithiobac, aminopyralid, clopyralid, florpyrauxifen, halauxifen, picloram) und Salze von Phenylessigsäure-, Phenylpropionsäure- und Phenylbutansäure-Verbindungen (2,4-D, 4-CPA, 3,4-D, MCPA, 2,4,5-T, 2,4-DB, 3,4-DB, MCPB, Dichloprop, Mecoprop etc.) sind sogar leicht wasserlöslich.

Unter einem SE versteht der Fachmann eine flüssige Pflanzenschutzmittel-Formulierung, in dem der bzw. die Pflanzenschutzwirkstoffe in Form von festen, feinteiligen Partikeln vorliegen, die in einer nicht-wässrigen flüssigen Phase suspendiert sind, die ihrerseits in einer wässrigen Phase emulgiert ist. Diese Formulierungen werden auch als Suspoemulsionskonzentrate bezeichnet.

Die vorgenannten Formulierungen enthalten neben einem oder mehreren, vorzugsweise organischen Pflanzenschutzwirkstoffen und wenigstens einem wässrigen oder nicht-wässrigen Verdünnungsmittel, in der Regel wenigstens eine oberflächenaktive Substanz, die häufig unter anionischen und nichtionischen Emulgatoren sowie unter anionischen und nichtionischen polymeren Dispergierhilfsmitteln ausgewählt ist und die der Bildung stabiler Suspensionen bzw. Emulsionen beim Verdünnen der Formulierung mit Wasser, sowie im Falle mehrphasiger flüssiger Formulierungen wie EW, SC, ME, OD, SL oder SE, der Stabilisierung der Phasen dienen. Gegebenenfalls enthalten die Formulierungen sogenannte Adjuvantien, welche die Wirksamkeit der des bzw. der Pflanzenschutzmittel verbessern. Weiterhin enthalten die Formulierungen in der Regel ein oder mehrere Additive, wie Additive zur Modifizierung der rheologischen Eigenschaften, Frostschutzmittel, Farbmittel und Biozide in den für den jeweiligen Formulierungstyp üblichen Mengen.

Die Erfindung wird nun anhand eines Ausführungsbeispiels mit Bezug zu den Zeichnungen erläutert.
- Figur 1: zeigt schematisch den Aufbau eines Ausführungsbeispiels des erfindungsgemäßen Systems und
- Figur 2: zeigt ein Detail der in Figur 1 gezeigten Hydraulikeinheit.

Das erfindungsgemäße System umfasst einen Behälter 1, welcher eine landwirtschaftliche Formulierung, insbesondere ein Pflanzenschutzmittel, aufnimmt. In den Behälter 1 integriert ist eine Fördereinheit 2, welche bei diesem Ausführungsbeispiel als Kolbendosierpumpe 2 ausgebildet ist. Die Kolbendosierpumpe 2 besitzt auf an sich bekannte Weise einen Förderkolben 4, welcher federbeaufschlagt ist und welcher in einem Zylinderraum hin und her bewegbar ist. Bei der Bewegung des Förderkolbens 4 wird Pflanzenschutzmittel aus dem Inneren des Behälters 1 am Boden angesaugt und durch Ventile in Richtung einer Entnahmeöffnung 19 des Behälters 1 nach außen gefördert. Bei der Entnahmeöffnung 19 kann beispielsweise eine (nicht gezeigte) Ausstoßeinrichtung, wie eine Spritzpistole, angeschlossen sein, über welche das Pflanzenschutzmittel auf dem Feld verteilt wird.

Die Kolbendosierpumpe 2 wird über eine Antriebseinheit angetrieben. Diese ist separat von der Kolbendosierpumpe 2 angeordnet und sie kann lösbar mit der Kolbendosierpumpe 2 gekoppelt werden. Für die lösbare Kopplung der Antriebseinheit an die Kolbendosierpumpe 2 ist eine Hydraulikleitung 8 mit einer Kupplung 5 vorgesehen.

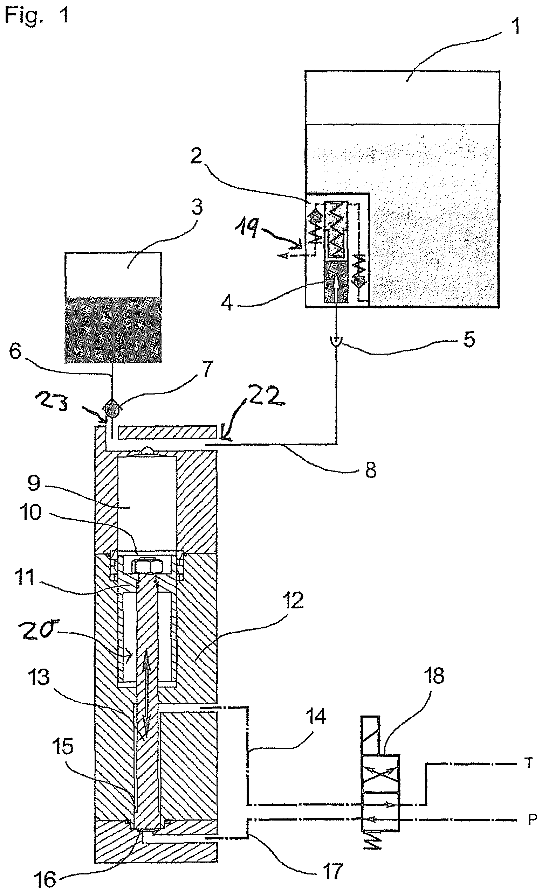

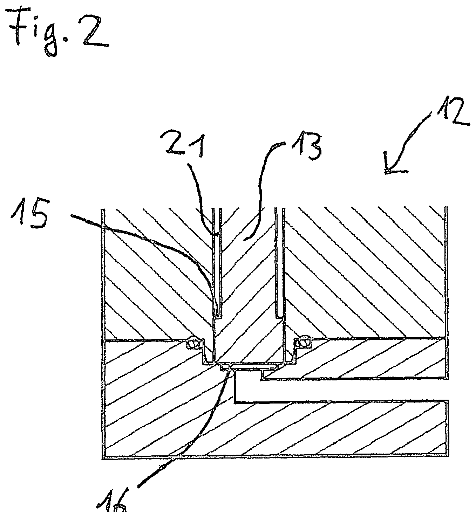

Des Weiteren umfasst die Antriebseinheit eine Hydraulikeinheit 12. Die Hydraulikeinheit 12 kann den Förderkolben 4 der Kolbendosierpumpe 2 hydraulisch antreiben, wie es im Folgenden erläutert wird:
Die Hydraulikeinheit 12 umfasst einen Zylinderraum 9 und einen weiteren Zylinderraum 21 (siehe Figur 2). Der Zylinderraum 9 wird im Folgenden auch als erster Zylinderraum und der weitere Zylinderraum 21 wird im Folgenden auch als zweiter Zylinderraum bezeichnet. Des Weiteren umfasst die Hydraulikeinheit 12 einen Kolben 20, welcher in den ersten und zweiten Zylinderräumen 9, 21 hin und her bewegbar ist, wie dies durch den in Figur 1 gezeigten Pfeil angedeutet ist.

Der Kolben 20 ist zweigeteilt. Der erste Kolbenteil 11 bewegt sich in dem ersten Zylinderraum 9, der zweite Kolbenteil 13 bewegt sich in dem zweiten Zylinderraum 21. In dem ersten Zylinderraum 9 befindet sich eine Hydraulikflüssigkeit, nämlich Wasser oder eine biologisch schnell abbaubare Hydraulikflüssigkeit, die im Folgenden auch als erste Hydraulikflüssigkeit bezeichnet wird. Bei dem ersten Kolbenteil 11 ist eine Kolbenfläche 10 gebildet, welche den ersten Zylinderraum 9 begrenzt und über welche ein Druck auf die erste Hydraulikflüssigkeit ausgeübt werden kann, die sich im Inneren des ersten Zylinderraums 9 befindet.

In dem zweiten Zylinderraum 21 befindet sich eine weitere beziehungsweise zweite Hydraulikflüssigkeit. Diese zweite Hydraulikflüssigkeit ist im hier beschriebenen Ausführungsbeispiel Hydrauliköl. Die zweite Hydraulikflüssigkeit unterscheidet sich von der ersten Hydraulikflüssigkeit dadurch, dass sie nicht umweltverträglich ist und daher beim Betrieb des Systems nicht in die Umgebung gelangen sollte. Die erste Hydraulikflüssigkeit kann beim Betrieb des Systems in die Umgebung gelangen, ohne eine umweltschädigende Wirkung zu entfalten. Es handelt sich im vorliegenden Ausführungsbeispiel um Wasser. Es kann jedoch auch eine biologisch schnell abbaubare Hydraulikflüssigkeit verwendet werden.

Im vorliegenden Ausführungsbeispiel wird der Kolben 20 durch die zweite Hydraulikflüssigkeit angetrieben, das heißt, in eine Hin- und Herbewegung versetzt. Hierfür sind bei dem zweiten Kolbenteil 13, welcher sich in dem zweiten Zylinderraum 21 bewegt, die Kolbenflächen 15 und 16 gebildet, welche entgegengesetzt ausgerichtet sind. Durch den zweiten Kolbenteil 13 wird der zweite Zylinderraum 21 in zwei getrennte Bereiche unterteilt. Dabei bildet die Kolbenfläche 15 eine in eine Richtung ausgerichtete Grenzfläche des einen Teils des zweiten Zylinderraums 21 und die Kolbenfläche 16 eine in die entgegengesetzte Richtung ausgerichtete Grenzfläche des anderen Teils des zweiten Kolbenraums 21. Der eine Teil des zweiten Zylinderraums 21 ist mit einer Hydraulikleitung 14 gekoppelt, der andere Teil des zweiten Zylinderraums 21 ist mit der Hydraulikleitung 17 gekoppelt. Die Hydraulikleitungen 14 und 17 sind mit einem Hydraulikventil 18 gekoppelt, über welches wechselweise die zweite Hydraulikflüssigkeit in die Hydraulikleitung 14 und die Hydraulikleitung 17 gedrückt wird. Es fließt somit abwechselnd die zweite Hydraulikflüssigkeit über die Hydraulikleitung 14 in den zweiten Zylinderraum 21 hinein und über die Hydraulikleitung 17 aus dem zweiten Zylinderraum 21 heraus und dann nach einem Umschalten des Hydraulikventils 18 fließt die zweite Hydraulikflüssigkeit über die Hydraulikleitung 17 in den zweiten Zylinderraum 21 hinein und über die Hydraulikleitung 14 aus dem zweiten Zylinderraum 21 heraus. Wenn die zweite Hydraulikflüssigkeit in die Hydraulikleitung 17 gedrückt wird, wird ein Druck auf die Hydraulikfläche 16 ausgeübt und somit der Kolben 20 bei der Darstellung gemäß Figur 1 nach oben bewegt. Wenn hingegen die zweite Hydraulikflüssigkeit in die Hydraulikleitung 14 gedrückt wird, wird ein Druck auf die Hydraulikfläche 15 ausgeübt, so dass der Kolben 20 bei der Darstellung gemäß Figur 1 nach unten bewegt wird.

Bei einer Bewegung des Kolbens 20 nach oben wird die erste Hydraulikflüssigkeit aus dem ersten Zylinderraum 9 durch die Austrittsöffnung 22 der Hydraulikeinheit 12 herausgedrückt und in die Hydraulikleitung 8 hineingedrückt. Hierdurch wird der Förderkolben 4 der Kolbendosierpumpe 2 gegen die Kraft einer Feder bewegt. Bei dieser Bewegung des Förderkolbens 4 wird das Pflanzenschutzmittel im Inneren des Behälters 1 angesaugt und aus der Entnahmeöffnung 19 aus dem Behälter 1 herausgefördert. Das Fördervolumen der Hydraulikeinheit 12 ist dabei um einiges größer als das Antriebsvolumen der Kolbendosierpumpe 2. Hierdurch wird unter allen möglichen Bedingungen die Funktionssicherheit gewährleistet.

Bewegt sich durch Umschaltung des Hydraulikventils 18 der Kolben 20 durch ölhydraulischen Druck auf der Kolbenfläche 15 bei der Darstellung gemäß Figur 1 nach unten, wird die erste Hydraulikflüssigkeit vom ersten Zylinderraum 9 über die Hydraulikleitung 8 und die Kupplung 5 aus dem Zylinderraum der Kolbendosierpumpe 2 gesaugt und kann ungehindert in den Zylinderraum 9 der Hydraulikeinheit 12 zurückfließen. Diese Fließbewegung wird durch die von der Feder der Kolbendosierpumpe 2 ausgeübte Kraft unterstützt.

Bei einer alternativen Ausführungsform weist der zweite Kolbenteil 13 nur eine weitere hydraulische Kolbenfläche auf, zum Beispiel die Kolbenfläche 16. In diesem Fall übt die zweite Hydraulikflüssigkeit eine Kraft auf den Kolben 20 aus, so dass dieser sich in Richtung einer Verkleinerung des ersten Zylinderraums 9 bewegt, sodass die erste Hydraulikflüssigkeit aus dem ersten Zylinderraum 9 durch die Austrittsöffnung 22 heraus gedrückt wird. Sobald in diesem Fall die zweite Hydraulikflüssigkeit keine oder eine geringere Kraft auf den Kolben 20 ausübt, wird der Kolben 20 aufgrund der von der Feder der Kolbendosierpumpe 2 ausgeübten Kraft zurück bewegt.

Die Hydraulikeinheit 12 erzeugt somit ölhydraulisch angetrieben, hydraulische Antriebsimpulse mit Wasser als erste Hydraulikflüssigkeit.

Die Hydraulikleitung 8 steht des Weiteren mit einem Füllventil 7 in Fluidverbindung. Im vorliegenden Ausführungsbeispiel ist in der Hydraulikeinheit 12 eine Leitung vorgesehen, welche den zweiten Zylinderraum 9 einerseits mit der Austrittsöffnung 22 verbindet, an welche die Hydraulikleitung 8 angeschlossen ist. Ferner ist diese Leitung mit einer Nachfüllöffnung 23 verbunden, an welche das Füllventil 7 angeschlossen ist. An das Füllventil 7 ist wiederum ein Vorratsbehälter 3 über eine Leitung 6 angeschlossen. In dem Vorratsbehälter 3 befindet sich die erste Hydraulikflüssigkeit, das heißt im vorliegenden Ausführungsbeispiel Wasser.

Bei dem Füllventil 7 handelt es sich um ein Rückschlagventil ohne Federrückstellung. Das Füllventil ist dabei so angeordnet, dass es schließt, wenn die Kolbenfläche 10 des Kolbens 20 einen Druck auf die erste Hydraulikflüssigkeit ausübt, so dass diese aus dem ersten Zylinderraum 9 heraus in die Hydraulikleitung 8 gedrückt wird. Wenn sich der Kolben 20 zurückbewegt, das heißt bei der Darstellung gemäß Figur 1 nach unten bewegt, fließt die erste Hydraulikflüssigkeit auch angetrieben von dem Druck, welcher durch die Kraft der Feder der Kolbendosierpumpe 2 erzeugt wird, zurück in den sich vergrößernden ersten Zylinderraum 9. Bei diesen Druckverhältnissen öffnet das Füllventil 7, so dass verhindert wird, dass ein Unterdruck in der Hydraulikleitung 8 entsteht und gegebenenfalls Luft in die Hydraulikleitung 8 gelangt. Bei geöffnetem Füllventil 7 kann ein etwaiger Verlust der ersten Hydraulikflüssigkeit dadurch ausgeglichen werden, dass die erste Hydraulikflüssigkeit von dem Vorratsbehälter 3 über das Füllventil 7 in die Hydraulikleitung 8 beziehungsweise den ersten Zylinderraum 9 strömt.

Kommt es somit durch Leckagen zu Verlusten der ersten Hydraulikflüssigkeit auf dem Weg vom ersten Zylinderraum 9 über die Hydraulikleitung 8 und die Kupplung 5 hin zum Förderkolben 4 der Kolbendosierpumpe 2, wird automatisch über das Füllventil 7 erste Hydraulikflüssigkeit aus dem Vorratsbehälter 3 angesaugt, wenn sich der Kolben 20 zurückbewegt, das heißt bei der Darstellung gemäß Figur 1 nach unten bewegt.

Außerdem verhindert das Füllventil 7 auch Unterdrücke im Antriebssystem für die Kolbendosierpumpe 2, wenn Wasser als Hydraulikflüssigkeit verwendet wird und die Temperatur stark abfällt.

Das Füllventil 7 bewirkt weiterhin die Entlüftung des Antriebssystems für die Kolbendosierpumpe 2. Hierfür ist das Füllventil 7 an der höchsten Stelle der Hydraulikleitung 8 angeordnet. Die Hydraulikleitung 8 beziehungsweise die mit der Hydraulikleitung 8 in Fluidverbindung stehenden Bereiche sind so ausgebildet, dass gegebenenfalls enthaltene Luft nach oben steigen und durch das geöffnete Füllventil 7 entweichen kann. Diese Entlüftung wird auch dadurch gewährleistet, dass das Füllventil 7 beim Zurückgehen des Kolbens 20 in einem geöffneten Zustand ist, so dass Luft durch das Füllventil 7 entweichen kann.

Das Hydraulikventil 18 und vorteilhafterweise auch die Hydraulikeinheit 12 sind bei dem vorliegenden Ausführungsbeispiel fest mit einem Trägerfahrzeug, wie beispielsweise einem Ackerschlepper, verbunden. Des Weiteren ist insbesondere auch das Füllventil 7 und der Vorratsbehälter 3 fest mit dem Trägerfahrzeug verbunden. Zum Verteilen eines Pflanzenschutzmittels auf dem Feld wird der Behälter 1 über die Kupplung 5 mit der Hydraulikleitung 8 verbunden. Nach dem Entleeren des Pflanzenschutzmittels aus dem Behälter 1 kann dieser wieder über die Kupplung 5 von der Hydraulikleitung 8 gelöst und entsorgt oder neu mit Pflanzenschutzmittel befüllt werden.

Im Folgenden wird ein Ausführungsbeispiel des erfindungsgemäßen Verfahrens beschrieben, welches mit dem vorstehend beschriebenen System zum Fördern einer landwirtschaftlichen Formulierung, insbesondere eines Pflanzenschutzmittels, betrieben wird:
Der mit Pflanzenschutzmittel gefüllte Behälter 1 wird über die Kupplung 5 mit der Hydraulikleitung 8 gekoppelt. Der Behälter 1 ist in diesem Fall auf dem Trägerfahrzeug befestigt und bei der Entnahmeöffnung mit einer Ausstoßeinrichtung verbunden. Über eine Hydraulikeinrichtung des Trägerfahrzeugs und die Steuerung des Hydraulikventils wird nun abwechselnd die zweite Hydraulikflüssigkeit, das heißt ein herkömmliches Hydrauliköl, unter hohem Druck abwechselnd in die Hydraulikleitung 14 und die Hydraulikleitung 17 gefördert. Der zweite Kolbenteil 13 wirkt mit seinen Kolbenflächen 15 und 16 in diesem Fall als doppelwirkende Kolbenstange, die sich in dem zweiten Zylinderraum 21 hin und her bewegt. Bei der Bewegung in eine Richtung verkleinert sich das Volumen des ersten Zylinderraums 9, wobei die Kolbenfläche 10 die erste Hydraulikflüssigkeit aus dem ersten Zylinderraum 9 herausdrückt.

Sie gelangt bei geschlossenem Füllventil 7 in die Hydraulikleitung 8 und über die Kupplung 5 zur Kolbendosierpumpe 2. Bei der Kolbendosierpumpe 2 wird der Förderkolben 4 so bewegt, dass das Pflanzenschutzmittel aus der Entnahmeöffnung 19 heraus gefördert wird.

Nach Umschaltung des Hydraulikventils 18 bewegt sich der Kolben 20 bei der Darstellung gemäß Figur 1 nach unten und saugt die erste Hydraulikflüssigkeit zurück in den ersten Zylinderraum 9, so dass sich der Förderkolben 4 der Kolbendosierpumpe 2 zurückbewegt. In diesem Fall ist das Füllventil 7 geöffnet, so dass die erste Hydraulikflüssigkeit aus dem Vorratsbehälter 3 zum Ausgleich etwaiger Verluste nachfließen kann und gleichzeitig in der Hydraulikleitung 8 oder im ersten Zylinderraum 9 enthaltene Luft nach oben durch das Füllventil 7 entweichen kann.

### Bezugszeichenliste:

- 1: Behälter
- 2: Fördereinheit; Kolbendosierpumpe
- 3: Vorratsbehälter
- 4: Antriebszylinder
- 5: Kupplung
- 6: Leitung
- 7: Füllventil
- 8: Hydraulikleitung
- 9: Zylinderraum
- 10: Kolbenfläche
- 11: erster Kolbenteil
- 12: Hydraulikeinheit
- 13: zweiter Kolbenteil
- 14: Hydraulikleitung
- 15: Kolbenfläche
- 16: Kolbenfläche
- 17: Hydraulikleitung
- 18: Hydraulikventil
- 19: Entnahmeöffnung
- 20: Kolben
- 21: weiterer Zylinderraum
- 22: Austrittsöffnung
- 23: Nachfüllöffnung

## Patentansprüche

1. System zum Fördern einer landwirtschaftlichen Formulierung mit
einem Behälter (1) zur Aufnahme der landwirtschaftlichen Formulierung, wobei der Behälter (1) eine Entnahmeöffnung (19) aufweist,
einer fest in oder an dem Behälter (1) befestigten Fördereinheit (2) zum Fördern der in dem Behälter (1) befindlichen landwirtschaftlichen Formulierung durch die Entnahmeöffnung (19) und
einer Antriebseinheit, die zum Antrieb der Fördereinheit (2) separat von der Fördereinheit (2) lösbar mit der Fördereinheit (2) gekoppelt ist, wobei die Antriebseinheit eine Hydraulikeinheit (12), die einen Zylinderraum (9), einen in dem Zylinderraum (9) hin und her bewegbaren Kolben (20) und eine Austrittsöffnung (22) für eine Hydraulikflüssigkeit umfasst, und eine Hydraulikleitung (8), die mit der Austrittsöffnung (22) gekoppelt und der Fördereinheit (2) koppelbar ist, aufweist,
**dadurch gekennzeichnet, dass**
die Hydraulikflüssigkeit Wasser ist oder biologisch schnell abbaubar ist,
die Hydraulikeinheit (12) einen weiteren Zylinderraum (21) aufweist, der mit zumindest einer weiteren Hydraulikleitung (14, 17) verbunden ist, über welche eine weitere Hydraulikflüssigkeit zur Hin- und Herbewegung des Kolbens (20) in den weiteren Zylinderraum (21) einleitbar ist, und
der Kolben (20) zweiteilig ausgebildet ist, wobei der erste Kolbenteil (11) eine erste hydraulische Kolbenfläche (10) aufweist, welche den Zylinderraum (9) begrenzt, und wobei der zweite Kolbenteil (13) zumindest eine weitere hydraulische Kolbenfläche (15, 16) aufweist, auf die ein Druck mittels der weiteren Hydraulikflüssigkeit ausübbar ist, so dass mittels der weiteren Hydraulikflüssigkeit der zweite Kolbenteil (13) in dem weiteren Zylinderraum (21) bewegbar ist.

2. System nach Anspruch 1, **dadurch gekennzeichnet, dass** die weitere hydraulische Kolbenfläche (15, 16) des zweiten Kolbenteils (13) eine zweite und eine dritte hydraulische Kolbenfläche (15, 16) aufweist, die entgegengesetzt ausgerichtet sind und auf die wechselweise ein Druck mittels der weiteren Hydraulikflüssigkeit ausübbar ist, so dass mittels der weiteren Hydraulikflüssigkeit der zweite Kolbenteil (13) in dem weiteren Zylinderraum (21) hin und her bewegbar ist.

3. System nach Anspruch 1 oder 2, **dadurch gekennzeichnet, dass** das System ein Hydraulikventil (18) umfasst, über welches der Hydraulikeinheit (12) über die zumindest eine weitere Hydraulikleitung (14, 17) die weitere Hydraulikflüssigkeit zuführbar ist.

4. System nach Anspruch 3, **dadurch gekennzeichnet, dass** das Hydraulikventil (18) und/oder die Hydraulikeinheit (12) fest mit einem Trägerfahrzeug verbunden ist/sind.

5. System nach einem der vorhergehenden Ansprüche, **dadurch gekennzeichnet, dass** die Fördereinheit (2) eine hydraulisch angetriebene Kolbendosierpumpe (2) ist.

6. System nach einem der vorhergehenden Ansprüche, **dadurch gekennzeichnet, dass** die Hydraulikleitung (8) mit einem Füllventil (7) in Fluidverbindung steht, über welches Hydraulikflüssigkeit in die Hydraulikleitung (8) einleitbar ist.

7. System nach Anspruch 6, **dadurch gekennzeichnet, dass** das Füllventil (7) ein Rückschlagventil ohne Federrückstellung ist.

8. System nach Anspruch 6 oder 7, **dadurch gekennzeichnet, dass** das Füllventil (7) so angeordnet ist, dass es öffnet, wenn der Kolben (20) keinen Druck auf die Hydraulikflüssigkeit zum Antrieb der Fördereinheit (2) ausübt.

9. System nach einem der Ansprüche 6 bis 8, **dadurch gekennzeichnet, dass** das Füllventil (7) an der höchsten Stelle der Hydraulikleitung (8) angeordnet ist und die Hydraulikleitung (8) so ausgebildet ist, dass in der Hydraulikleitung (8) enthaltene Luft nach oben steigen und durch das geöffnete Füllventil (7) entweichen kann.

10. Verfahren zum Fördern einer landwirtschaftlichen Formulierung, bei dem
in einem Zylinderraum (9) einer Hydraulikeinheit (12) ein Kolben (20) bewegt wird und dadurch ein Druck auf eine Hydraulikflüssigkeit ausgeübt wird, wobei die Hydraulikflüssigkeit Wasser ist oder biologisch schnell abbaubar ist,
die Hydraulikflüssigkeit den ausgeübten Druck über eine mit dem Zylinderraum (9) verbundene Hydraulikleitung (8) an eine separat von der Hydraulikeinheit (12) angeordnete Fördereinheit (2) überträgt, wobei die Hydraulikleitung (8) mit der Fördereinheit (2) verbindbar und von der Fördereinheit (2) lösbar ist und wobei die Fördereinheit (2) fest in oder an einem Behälter (2) befestigt ist, welcher die landwirtschaftliche Formulierung aufnimmt,
der Kolben (20) durch eine weitere Hydraulikflüssigkeit angetrieben wird und
die Fördereinheit (2) von dem durch die Hydraulikflüssigkeit übertragenen Druck angetrieben wird, so dass sie die landwirtschaftliche Formulierung durch eine Entnahmeöffnung (19) des Behälters (2) heraus fördert.

11. Verfahren nach Anspruch 10, **dadurch gekennzeichnet, dass** die landwirtschaftliche Formulierung ein Pflanzenschutzmittel enthält.

12. Verwendung des Systems nach einem der Ansprüche 1 bis 9 zum Fördern einer landwirtschaftlichen Formulierung, die ein Pflanzenschutzmittel enthält.

## Claims

1. A system for delivering an agricultural formulation, having
a container (1) for holding the agricultural formulation, the container (1) having a removal opening (19),
a delivery unit (2), securely fastened in or to the container (1), for delivering the agricultural formulation located in the container (1) through the removal opening (19), and
a drive unit which, in order to drive the delivery unit (2), separately from the delivery unit (2), is coupled detachably to the delivery unit (2),
wherein the drive unit has a hydraulic unit (12), which comprises a cylinder chamber (9), a piston (20) that is movable back and forth in the cylinder chamber (9), and an outlet opening (22) for a hydraulic fluid, and a hydraulic line (8) which is coupled to the outlet opening (22) and able to be coupled to the delivery unit (2),
wherein
the hydraulic fluid is water or rapidly biodegradable,
the hydraulic unit (12) has a further cylinder chamber (21), which is connected to at least one further hydraulic line (14, 17), via which a further hydraulic fluid for moving the piston (20) back and forth is able to be introduced into the further cylinder chamber (21),
the piston (20) is configured in two parts, the first piston part (11) having a first hydraulic piston surface (10) which bounds the cylinder chamber (9), and the second piston part (13) having at least one further hydraulic piston surface (15, 16) on which a pressure is able to be exerted by means of the further hydraulic fluid, such that, by means of the further hydraulic fluid, the second piston part (13) is movable in the further cylinder chamber (21).

2. The system according to claim 1, wherein the further hydraulic piston surface (15, 16) of the second piston part (13) has a second and a third hydraulic piston surface (15, 16) which are oppositely oriented and on which a pressure is able to be exerted alternately by means of the further hydraulic fluid, such that, by means of the further hydraulic fluid, the second piston part (13) is movable back and forth in the further cylinder chamber (21).

3. The system according to claim 1 or 2, wherein the system comprises a hydraulic valve (18), via which the further hydraulic fluid is able to be fed to the hydraulic unit (12) via the at least one further hydraulic line (14, 17).

4. The system according to claim 3, wherein the hydraulic valve (18) and/or the hydraulic unit (12) is/are securely connected to a carrier vehicle.

5. The system according to one of the preceding claims, wherein the delivery unit (2) is a hydraulically driven piston metering pump (2).

6. The system according to one of the preceding claims, wherein the hydraulic line (8) is fluidically connected to a filler valve (7), via which hydraulic fluid is able to be introduced into the hydraulic line (8) .

7. The system according to claim 6, wherein the filler valve (7) is a nonreturn valve without a spring reset.

8. The system according to claim 6 or 7, wherein the filler valve (7) is arranged such that it opens when the piston (20) does not exert any pressure on the hydraulic fluid to drive the delivery unit (2).

9. The system according to one of claims 6 to 8, wherein the filler valve (7) is arranged at the highest point of the hydraulic line (8) and the hydraulic line (8) is configured such that air contained in the hydraulic line (8) can rise upward and escape through the open filler valve (7).

10. A method for delivering an agricultural formulation, in which
a piston (20) is moved in a cylinder chamber (9) of a hydraulic unit (12) and as a result a pressure is exerted on a hydraulic fluid, the hydraulic fluid being water or rapidly biodegradable,
the hydraulic fluid transmits the exerted pressure via a hydraulic line (8) connected to the cylinder chamber (9) to a delivery unit (2) arranged separately from the hydraulic unit (12), the hydraulic line (8) being connectable to the delivery unit (2) and being detachable from the delivery unit (2), and the delivery unit (2) being securely fastened in or to a container (2) which holds the agricultural formulation,
the piston (20) is driven by a further hydraulic fluid, and
the delivery unit (12) is driven by the pressure transmitted by the hydraulic fluid, such that it delivers the agricultural formulation out through a removal opening (19) of the container (2).

11. The method according to claim 10, wherein the agricultural formulation contains a crop protection agent.

12. The use of the system according to one of claims 1 to 9 to deliver an agricultural formulation which contains a crop protection agent.

## Revendications

1. Système de transport d'une formulation agricole comprenant
un récipient (1) pour recevoir la formulation agricole, le récipient (1) présentant une ouverture de prélèvement (19),
une unité de transport (2) fixée fermement dans ou sur le récipient (1) pour transporter la formulation agricole se trouvant dans le récipient (1) à travers l'ouverture de prélèvement (19) et
une unité d'entraînement qui est accouplée à l'unité de transport (2) de manière détachable séparément de l'unité de transport (2) pour entraîner l'unité de transport (2), l'unité d'entraînement présentant une unité hydraulique (12) qui comprend un espace de cylindre (9), un piston (20) déplaçable en va et vient dans l'espace de cylindre (9) et une ouverture de sortie (22) pour un liquide hydraulique, et une conduite hydraulique (8) qui est accouplée à l'ouverture de sortie (22) et qui peut être accouplée à l'unité de transport (2),
**caractérisé en ce que**
le liquide hydraulique est de l'eau ou peut être rapidement biodégradable,
l'unité hydraulique (12) présente un espace de cylindre supplémentaire (21) qui est connecté à au moins une conduite hydraulique supplémentaire (14, 17) par le biais de laquelle un liquide hydraulique supplémentaire peut être introduit dans l'espace de cylindre supplémentaire (21) en vue du déplacement en va et vient du piston (20), et
le piston (20) est réalisé en deux parties, la première partie de piston (11) présentant une première surface de piston hydraulique (10) qui limite l'espace de cylindre (9) et la deuxième partie de piston (13) présentant au moins une surface de piston hydraulique supplémentaire (15, 16) sur laquelle peut être exercée une pression au moyen du liquide hydraulique supplémentaire, de telle sorte que la deuxième partie de piston (13) puisse être déplacée au moyen du liquide hydraulique supplémentaire dans l'espace de cylindre supplémentaire (21).

2. Système selon la revendication 1, **caractérisé en ce que** la surface de piston hydraulique supplémentaire (15, 16) de la deuxième partie de piston (13) présente une deuxième et une troisième surface de piston hydraulique (15, 16) qui sont orientées à l'opposé et sur lesquelles une pression peut être exercée en alternance au moyen du liquide hydraulique supplémentaire, de telle sorte que la deuxième partie de piston (13) puisse être déplacée en va et vient au moyen du liquide hydraulique supplémentaire dans le deuxième espace de cylindre (21).

3. Système selon la revendication 1 ou 2, **caractérisé en ce que** le système comprend une soupape hydraulique (18) par le biais de laquelle l'unité hydraulique (12) peut être alimentée en liquide hydraulique supplémentaire par le biais de l'au moins une conduite hydraulique supplémentaire (14, 17) .

4. Système selon la revendication 3, **caractérisé en ce que** la soupape hydraulique (18) et/ou l'unité hydraulique (12) est/sont connectée(s) fixement à un véhicule porteur.

5. Système selon l'une quelconque des revendications précédentes, **caractérisé en ce que** l'unité de transport (2) est une pompe de dosage à piston (2) entraînée hydrauliquement.

6. Système selon l'une quelconque des revendications précédentes, **caractérisé en ce que** la conduite hydraulique (8) est en liaison fluidique avec une soupape de remplissage (7) par le biais de laquelle du liquide hydraulique peut être introduit dans la conduite hydraulique (8).

7. Système selon la revendication 6, **caractérisé en ce que** la soupape de remplissage (7) est un clapet antiretour sans rappel de ressort.

8. Système selon la revendication 6 ou 7, **caractérisé en ce que** la soupape de remplissage (7) est disposée de telle sorte qu'elle s'ouvre lorsque le piston (20) n'exerce aucune pression sur le liquide hydraulique pour entraîner l'unité de transport (2).

9. Système selon l'une quelconque des revendications 6 à 8, **caractérisé en ce que** la soupape de remplissage (7) est disposée au niveau du point le plus haut de la conduite hydraulique (8) et la conduite hydraulique (8) est réalisée de telle sorte que l'air contenu dans la conduite hydraulique (8) puisse monter vers le haut et puisse s'échapper à travers la soupape de remplissage ouverte (7).

10. Procédé de transport d'une formulation agricole dans lequel
un piston (20) est déplacé dans un espace de cylindre (9) d'une unité hydraulique (12) et de ce fait une pression est exercée sur un liquide hydraulique,
le liquide hydraulique étant de l'eau ou étant rapidement biodégradable,
le liquide hydraulique transmet la pression exercée à une unité de transport (2) disposée séparément de l'unité hydraulique (12) par le biais d'une conduite hydraulique (8) connectée à l'espace de cylindre (9), la conduite hydraulique (8) pouvant être connectée à l'unité de transport (2) et pouvant être détachée de l'unité de transport (2) et l'unité de transport (2) étant fixée fermement dans ou sur un récipient (2) qui reçoit la formulation agricole,
le piston (20) est entraîné par un liquide hydraulique supplémentaire et
l'unité de transport (2) est entraînée par la pression transmise par le liquide hydraulique, de telle sorte qu'elle transporte la formulation agricole à travers une ouverture de prélèvement (19) hors du récipient (2).

11. Procédé selon la revendication 10, **caractérisé en ce que** la formulation agricole contient un agent phytosanitaire.

12. Utilisation du système selon l'une quelconque des revendications 1 à 9, pour transporter une formulation agricole qui contient un agent phytosanitaire.
